# EUROPÄISCHE PATENTSCHRIFT

(11) **EP 2 362 195 B1**
(45) Veröffentlichungstag und Bekanntmachung des Hinweises auf die Patenterteilung: **14.06.2017**
(21) Anmeldenummer: 11001453.7
(22) Anmeldetag: 22.02.2011
(51) Int. Cl.: G01G 17/02

(54) **Waage**
Scales
Balance

(30) Priorität: 27.02.2010 DE 102010009641
(43) Veröffentlichungstag der Anmeldung: 31.08.2011
(73) Patentinhaber: Bizerba SE & Co. KG, 72336 Balingen (DE)
(72) Erfinder: Hauck, Timo, 67663 Kaiserslautern (DE)
(74) Vertreter: Huber, Meik

(56) Entgegenhaltungen:
- WO-A1-02/084232

## Beschreibung

Die Erfindung betrifft eine Waage zum Wiegen von vorzugsweise strangförmigem Wiegegut gemäß den Merkmalen des Oberbegriffs des Anspruchs 1.

Aus der EP 0 145 351 A2 ist eine solche Waage bekannt. Dort werden Teigstränge über ein Rollenförderband transportiert, wobei eine der Rollen als Gewichtsaufnehmer ausgebildet ist. Das Gewichtssignal wird über die Zeit integriert und bei Erreichen eines voreingestellten Gesamtgewichts wird eine Schneidevorrichtung aktiviert, die den Teigstrang abschneidet.

In der EP 2 116 821 A1 ist ebenfalls eine Waage mit einem als Rolle ausgebildeten Gewichtsaufnehmer gezeigt. Ein Endlosförderband wird hier über beabstandete Umlenkrollen umlaufend geführt, wobei der Gewichtsaufnehmer zwischen den beabstandeten Rollen angeordnet ist.

In der WO 02 084 232 ist eine Waage bekannt, wobei das Gesamtgewicht anhand des differenzierten Gewichtssignal bestimmt wird. Der Erfindung liegt die Aufgabe zugrunde, eine Waage für vorzugsweise strangförmiges Wiegegut zu schaffen, die eine hohe Genauigkeit aufweist, dabei möglichst wenig Bauraum benötigt, kostengünstig zu fertigen ist und insbesondere für Wiegegüter unterschiedlicher Länge einsetzbar ist.

Diese Aufgabe wird erfindungsgemäß durch eine Waage mit den Merkmalen des Anspruchs 1 und eine Waage mit den Merkmalen des Anspruchs 7 gelöst.

Eine Auswertevorrichtung für die Meßsignale des Gewichtsaufnehmers weist einen Integrator und einen Differentiator auf. So kann Gewichtssignal zeitgleich über die Zeit integriert werden, um einen Gewichtswert zu erhalten und nach der Zeit abgeleitet werden, um aus der Ableitung automatisch den Startzeitpunkt der Messung und/oder den Stoppzeitpunkt einer Gewichtsmessung automatisch zu bestimmen. Dadurch tritt keine merkliche Verzögerung in der Signalverarbeitung auf und die Messwerte können quasi in Echtzeit verarbeitet werden. Eine Zwischenspeicherung der Meßsignale ist somit nicht notwendig.

Der Gewichtsaufnehmer ist als Rolle ausgebildet. Diese Rolle ist sehr kurz im Verhältnis zu der Länge des Wiegeguts. Das Gesamtgewicht erhält man durch Integration der vielen Einzelmesswerte, die bei dem Transport des Wiegeguts über den Gewichtsaufnehmer entstehen. Diese Anordnung spart zum einen Platz ein und zum anderen ist die Berührfläche zwischen der Rolle und dem insbesondere strangförmigen Wiegegut ein schmales Rechteck oder idealerweise eine Linie, so dass jeweils eine genaue Messung des Teilgewichts des über der Rolle befindlichen Querschnitts des Wägeguts möglich ist.

Über einen Speicher der Auswertevorrichtung werden Entlastungswerte fortlaufend gespeichert. Entlastungswerte sind dabei in Ruhestellung des Gewichtsaufnehmers gemessene Gewichtswerte. Diese Entlastungswerte sind im Idealfall alle gleich hoch, insbesondere Null. Im Falle einer LangzeitDrift aufgrund von Verschleißerscheinungen oder bei Produktablagerungen auf dem Gewichtsaufnehmer können sich die Entlastungswerte jedoch mit der Zeit ändern. Die Auswertevorrichtung kann anhand der Vielzahl fortlaufender Entlastungswerte eine solche Drift erkennen und korrigieren. Die Entlastungswerte ermittelt die Auswertevorrichtung dabei insbesondere als Gewichtswert in der Ruhelage zwischen zwei aufeinanderfolgenden Wiegevorgängen oder vor Beginn oder am Ende nach einem Wiegezyklus. So kann eine hohe Genauigkeit der Waage über einen langen Zeitraum erhalten werden.

Bei dem Wiegen von Wägegut, insbesondere von Wägegut mit unterschiedlicher Länge bzw. mit einer Länge die größer ist als die Länge des Gewichtsaufnehmers, ist es erforderlich, den Startzeitpunkt sowie auch den Stoppzeitpunkt der Messung genau festzulegen. Nur so kann mittels Integration oder Aufsummierung von vielen Einzelmesswerten ein genauer Messwert ermittelt werden. Der Startzeitpunkt ist dabei der Zeitpunkt, zu dem das Wiegegut beginnt, auf den Gewichtsaufnehmer aufzulaufen. Der Stoppzeitpunkt ist der Zeitpunkt, zu dem das Wiegegut den Gewichtsaufnehmer verlässt. In der Praxis werden diese Zeitpunkte über zusätzliche Sensoren, z. B. Lichtschranken, bestimmt. Auf solche zusätzlichen Sensoren kann bei der erfindungsgemäßen Vorrichtung verzichtet werden. Damit werden Kosten und Bauraum eingespart.

Die Auswertevorrichtung ermittelt das Gesamtgewicht eines Wägeguts mit einem Integrator durch Integration der vielen Einzelmesswerte, die bei dem Transport des Wiegeguts über den Gewichtsaufnehmer entstehen. Es ist vorgesehen, dass die Auswertevorrichtung einen Mikroprozessor aufweist, der die Auswertung steuert und die erforderliche Kommunikation mit Sensoren wie Wägezellen, Messaufnehmern oder externen Komponenten über Schnittstellen vornimmt.

Es ist vorgesehen, dass das integral ermittelte Gewicht über in einem Speicher der Auswerteeinrichtung abgelegte Korrekturfaktoren auf das tatsächliche, statische Gewicht des Wiegeguts zurückgerechnet werden kann. Diese Korrekturfaktoren können in Abhängigkeit des eingestellten Filters und der Transportgeschwindigkeit experimentell ermittelt und in dem Speicher z. B. in Form einer Tabelle hinterlegt werden.

Die Auswertevorrichtung kann in einer Ausführung den Startzeitpunkt und/oder den Stoppzeitpunkt durch Vergleich des von dem Differentiator nach der Zeit abgeleiteten, also differentierten Gewichtssignals mit einem Schwellwert bestimmen. Dabei wird ein Schwellwert über eine Eingabevorrichtung eingestellt oder ein in einem Speicher abgelegter Schwellwert als Vergleichsgröße verwendet. Es ist vorgesehen, dass ein erster Schwellwert für den Startzeitpunkt und ein zweiter Schwellwert für den Stoppzeitpunkt verwendet werden, um eine verbesserte Genauigkeit zu ermöglichen.

Zur Bestimmung des Startzeitpunkts und/oder des Stoppzeitpunkts kann der Differentiator auch die zweite Ableitung des Gewichtssignals nach der Zeit bilden. Die Auswertevorrichtung kann die zweite Ableitung des Gewichtssignals verwenden, um einen Wendepunkt anhand des Nullpunkts der zweiten Ableitung als Startzeitpunkt und/oder Stoppzeitpunkt festzulegen.

Es ist auch vorgesehen, dass die Auswertevorrichtung den Startzeitpunkt und/oder den Stoppzeitpunkt durch die Auswertung des Vorzeichens des einfach differentierten Gewichtssignals in Kombination mit der Zeit bestimmt, indem das Vorliegen eines positiven Vorzeichens des differentierten Gewichtssignals über eine vorbestimmte, vorzugsweise einstellbare, Zeitspanne den Startzeitpunkt festlegt und /oder indem das Vorliegen eines negativen Vorzeichens des differentierten Gewichtssignals über eine vorbestimmte, vorzugsweise einstellbare, Zeitspanne den Stoppzeitpunkt festlegt. Über die Verknüpfung einer Zeitspanne mit der Bedingung des stetigen Ansteigens oder Abfallens des Gewichtssignals kann so der Beginn oder das Ende eines Messvorganges sicher festgelegt und damit der Startzeitpunkt bzw. der Stoppzeitpunkt der Messung bestimmt werden.

Die einzelnen Methoden zur Bestimmung des Startzeitpunkts und/oder des Stoppzeitpunkts können auch miteinander kombiniert werden. Insbesondere kann der Differentiator die erste Ableitung und die zweite Ableitung des Gewichtssignals gleichzeitig durchführen und der Auswertevorrichtung zur Verfügung stellen.

Weiter es ist in einer Ausführung vorgesehen, dass die Auswertevorrichtung einen oder mehrere Entlastungspunkte der Waage ermittelt und aus diesen Entlastungspunkten den Nullpunkt der Waage zu bestimmen und/oder einen Schwellenwert festzulegen. Der Entlastungspunkt wird dabei bestimmt, indem im Ruhezustand, also bei unbelasteter Waage der vom Gewichtsaufnehmer gelieferte Gewichtswert als Nullpunkt definiert und von der Auswertevorrichtung bei zukünftigen Messungen berücksichtigt wird. Der Entlastungspunkt kann auch im dynamischen Betrieb während des Wiegevorganges bestimmt werden, indem der vom Gewichtsaufnehmer gelieferte Gewichtswert zwischen zwei Wäge-Intervallen als Nullpunkt der Waage bzw. Entlastungspunkt definiert wird.

In einer verbesserten Ausführung ist es beispielsweise denkbar, dass dieser Entlastungswert, also der zum Entlastungspunkt gemessene Gewichtswert, von der Auswertevorrichtung in einem Speicher gespeichert wird. Anhand des Vergleichs vieler Entlastungspunkte über einen bestimmten Zeitraum hinweg, kann die Auswertevorrichtung ein Driften dieses Entlastungspunktes feststellen. Dieser Versatz (Drift) bei Entlastung tritt bspw. durch einen Drifteffekt der Wiegeeinrichtung oder durch Produktablagerungen auf. Die Auswerteeinrichtung kann dann mittels linearer Näherungsfunktionen diese Nullpunktdrift errechnen und korrigieren, um dadurch das Messergebnis zu verbessern.

In einer Ausführung ist vorgesehen, dass die Auswerteschaltung ein vorzugsweise einstellbares Filter zum Filtern der Gewichtswerte aufweist, um das Messergebnis zu verbessern. Das Filter kann als Tiefpassfilter oder als Bandpassfilter ausgebildet sein, wobei vorzugsweise die Grenzfrequenz des Tiefpassfilters oder die Mittenfrequenz des Bandpassfilters und/oder die Güte bzw. Steilheit des Filters einstellbar ist.

Der Differentiator und der Integrator können als elektronische Schaltung, insbesondere mit einem entsprechend beschalteten Operationsverstärker, oder als Software zur Signalverarbeitung ausgeführt sein.

Um auch bei unterschiedlichen Transportgeschwindigkeiten des Wägeguts möglichst genau wiegen zu können ist in einer Ausführung vorgesehen, dass die Auswertevorrichtung einen Eingang zur Eingabe der Transportgeschwindigkeit bzw. Bandgeschwindigkeit aufweist. An den Eingang kann auch ein Sensor, der die Transport- bzw. Bandgeschwindigkeit misst, angeschlossen sein. So kann die Auswertevorrichtung die Anzahl der Integrationsintervalle pro Zeiteinheit entsprechend der Geschwindigkeit anpassen.

Es ist vorgesehen, dass der Gewichtsaufnehmer als Rolle mit einem Durchmesser ausgebildet ist, der gering im Verhältnis zu der Länge der zu wiegenden Wiegegüter ist. In der Praxis hat sich ein Rollendurchmesser im Bereich von 15mm bis zu 75mm als Idealwert herausgestellt.

Aufgrund des in Transportrichtung kurz ausgebildeten Gewichtsaufnehmers kann die Waage auch zwischen den einzelnen Vorrichtungen einer Produktionslinie angeordnet sein. Auf ein Vereinzeln (Auseinanderziehen) der Wiegegütern, wie es bei längeren Wiegegütern bzw. längeren Gewichtsaufnehmern üblich ist, kann dabei aufgrund der kurzen Abmessungen des Gewichtsaufnehmers verzichtet werden. Dadurch können auch mit verhältnismäßig geringen Transportgeschwindigkeiten hohe Durchsätze erreicht werden.

Die Rolle kann zwischen einem Zuführband und einem Abführband angeordnet sein, wobei das Zuführband und das Abführband jeweils Umlenkrollen aufweisen, über die jeweils ein Endlosband geführt ist. Das Zuführband und/oder das Abführband kann angetrieben sein und den Transport des Wägeguts übernehmen. Dieses wird dabei über die Rolle geschoben, so dass diese keinen eigenen Antrieb benötigt. Die Rolle ist dabei in direkten Kontakt mit dem Wiegegut. Das hat den Vorteil, dass das Messergebnis nicht durch ein über die Rolle laufendes Band verfälscht wird.

Alternativ kann die Rolle auch zwischen einem Zuführband und einem Abführband angeordnet sein, wobei ein gemeinsames Endlosband über das Zuführband, das Abführband und die Rolle geführt ist.

Es ist vorgesehen, dass die Rolle so angeordnet ist, dass die Oberkante der Umfangfläche mit der Oberfläche des Zuführbandes und der Oberfläche des Abführbandes fluchtet. Diese Anordnung bringt bei der Verwiegung von elastischem Wiegegut optimale Ergebnisse. Wird dagegen ein biegesteifes Wiegegut verwogen, kann die Rolle auch so angeordnet sein, dass deren Oberkante im Bereich vcn 0,2mm bis zu 5mm gegenüber der Oberfläche des Zuführbandes und der Oberfläche des Abführbandes erhaben ist.

In einer Ausführung kann die Auswertevorrichtung anhand eines einzelnen Messwertes durch Vergleich mit den übrigen Messwerten Rückschlüsse auf die Homogenität und/oder die Querschnittsfläche des Wiegeguts treffen. Insbesondere kann die Auswertevorrichtung durch Vergleich der Einzelmesswerte untereinander Abweichungen im Gewicht feststellen, die auf Inhomogenitäten, insbesondere Hohlräume oder Fremdeinschlüsse, im Wägegut oder auf einen von einem Sollwert abweichenden Querschnitt des Wägeguts hinweisen. Es kann vorgesehen sein, dass die Auswertevorrichtung eine Anzeigevorrichtung aufweist und solche Abweichungen anzeigt oder an eine angeschlossene Steuereinrichtung oder Kontrolleinrichtung weiterleitet.

Eine Anwendung der erfindungsgemäßen Waage ist insbesondere im Lebensmittelbereich bei der Verwiegung von flexiblen strangförmigen Lebensmitteln, wie Teigsträngen oder Wurststrängen oder Hackfleisch vorgesehen. Jedoch ist auch eine Anwendung im Logistikbereich oder im Verpackungsbereich denkbar um beispielsweise Pakete unterschiedlicher Länge zu wiegen. Ein weiterer möglicher Anwendungsfall sind biegesteife Produkte (Bspw. Schokoriegel), die aufgrund ihrer gleichmäßigen Konsistenz und geometrischen Abmessungen für reproduzierbare Ergebnisse sorgen. Durch die raumsparende Ausgestaltung des Gewichtsaufnehmers als Rolle kann die Wiegevorrichtung bspw. in einer Produktionslinie zwischen die einzelnen Bearbeitungsstationen als In-ProzeßKontrolle angeordnet werden.

Weitere Ausführungsbeispiele der Erfindung sind in den Figuren dargestellt und der dazugehörenden Beschreibung beschrieben.

Es zeigen,
- Figur 1:: Eine schematische Darstellung der Waage;
- Figur 2:: Ein beispielhaftes Gewichtssignal des Gewichtsaufnehmers.

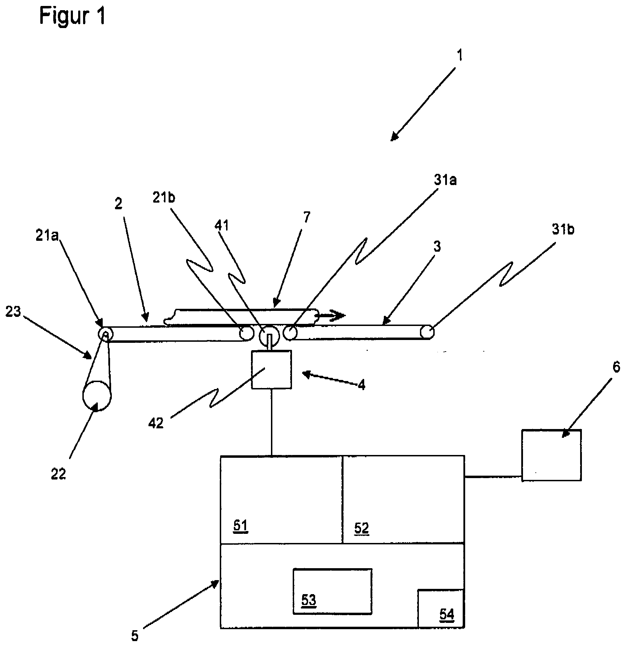

**Figur 1** zeigt eine Waage 1 mit einem Zuführband 2 und einem Abführband 3. Zwischen dem Zuführband 2 und dem Abführband 3 ist ein Gewichtsaufnehmer 4 mit einer Rolle 41 angeordnet. Die Rolle 41 weist eine Drehachse auf, die rechtwinklig zu der Transportrichtung des Wägeguts verläuft.

Die Komponenten der Waage sind auf einem der Übersichtlichkeit wegen nicht dargestellten Gestell gehaltert. Das Zuführband 2 weist eine über einen Motor 22 mit Riementrieb 23 angetriebene Antriebsrolle 21a und eine Umlenkrolle 21b auf, über die ein Endlosband umlaufend geführt ist. Der Motor 22 weist einen Geschwindigkeitsgeber auf und gibt seine Geschwindigkeit über eine Sensorleitung an einen dafür vorgesehenen Eingang der Auswerteeinrichtung 5 weiter.

Das Wiegegut 7 wird von dem angetriebenen Zuführband 2 über die Rolle 41 in Pfeilrichtung auf das Abführband 3 transportiert. Dieses weist zwei Umlenkrollen 31a, 31b auf, über die ein Endlosband geführt ist. Das Abführband kann ebenfalls eine motorisch angetriebene Umlenkrolle zum Abtransport des Wiegeguts 7 aufweisen, oder ohne Antrieb ausgebildet sein und die Eigengeschwindigkeit des Wiegeguts 7 zum Abtransport nutzen.

Die Rolle 41 ist mit einer Wägezelle 42 verbunden, die beispielsweise eine handelsübliche DMS-Wägezelle (Dehnungsmesstreifen) oder EMK-Wägezelle (elektromagnetische Kraftkompensation) sein kann. Die Wägezelle liefert ihr Signal an eine Auswertevorrichtung 5, die das Messsignal auswertet und verarbeitet. Die Auswertevorrichtung weist einen Integrator 51 und einen Differentiator 52, sowie einen einstellbaren Filter 53 auf. Über das Filter 53 werden die Messsignale geglättet, um z.B. über eine Tiefpassfilterung eine Rauschunterdrückung durchzuführen und ein verbessertes Messsignal zu erhalten.

Die Auswertevorrichtung 5 weist weiter einen Speicher 54 auf, der als nichtflüchtiger, wiederbeschreibbarer Flash-Speicher ausgebildet ist und zur Speicherung von Messwerten oder von Entlastungswerten dient.

Über einen als Bedien- und Anzeigevorrichtung 7 ausgebildeten Touch-Screen (berührungsempfindlicher Bildschirm) kann die Waage 1 bedient werden.

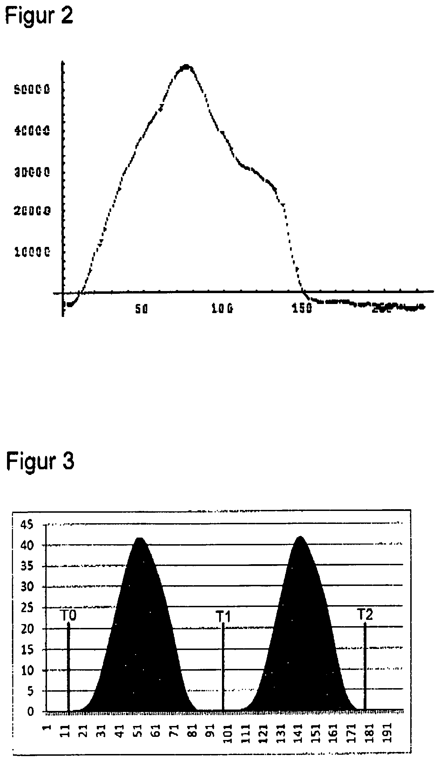

In **Figur 2** ist ein beispielhafter Verlauf des von dem Gewichtsaufnehmer 4 bei einer Verwiegung eines Wiegeguts gelieferten Gewichtssignales dargestellt. Auf der Abszisse sind die Gewichtswerte aufgetragen und auf der Ordinate der Zeitverlauf. Das Messfenster zur Gewichtsbestimmung reicht dabei von dem automatisch zu bestimmenden Startzeitpunkt bis zu dem ebenfalls automatisch zu bestimmenden Stoppzeitpunkt. Beim Auflaufen des Wiegeguts auf die Rolle steigt das Gewichtssignal stark an. Durch Ableiten des Gewichtssignales in dem Differentiator 52 kann dieser Anstieg detektiert und von der Auswertevorrichtung 5 als Startzeitpunkt für die Messung automatisch bestimmt werden. Mit dem Startzeitpunkt beginnt der Integrator 51 mit der Integration bzw. Aufsummierung des Gewichtssignales. Wenn das Wägegut gegen Ende der Messung von der Rolle abläuft, spiegelt sich dies in einem steilen Signalabfall wieder, der ebenfalls im Differentiator 52 einfach zu detektieren ist und somit die Auswertevorrichtung 5 den Stoppzeitpunkt für die Messung automatisch bestimmt.

Mit Ende der Messung stoppt der Integrator 51 die Integration und das vorliegende Ergebnis des Integrators 51 stellt den Gewichtswert dar. Dabei wird das Gewicht dynamisch beim Überfahren der Rolle 41 ermittelt. Die Rolle 41 ist erheblich kürzer als das Wiegegut und berührt dieses im Idealfall nur an einer Linie. Der zu einem Zeitpunkt anstehende Gewichtswert ist dabei ein Maß für das Gewicht des über der Rolle 41 befindlichen Querschnitts des Wiegeguts 7. Etwaige Schwankungen des Querschnitts oder der Homogenität des Wiegeguts spiegeln sich in dem Verlauf des Messsignals während des Messvorganges wieder und lassen sich von der Auswertevorrichtung 5 einfach detektieren.

In **Figur 3** ist die beispielhafte Messkurve einer Rolle 41 des Gewichtsaufnehmers 4 beim Messen von zwei beabstandeten Wiegegütern gezeigt. Aus dieser Messkurve ermittelt die Auswertevorrichtung die Entlastungspunkte T0, T1 und T2. Die Auswertevorrichtung 5 bestimmt dazu die zeitliche Differenz zwischen zwei Messvorgängen und legt als Entlastungspunkt den jeweils gemessenen Gewichtswert in der Mitte zwischen den Messvorgängen fest. Diese Gewichtswerte speichert die Auswertevorrichtung 5 jeweils als Entlastungswert in dem Speicher 54 in einer Tabelle oder an fortlaufenden Speicherplätzen. Anhand der Beobachtung einer Vielzahl dieser gespeicherten Entlastungswerten kann die Auswertevorrichtung 5 eine Langzeitdrift der Waage feststellen und/oder mittels linearer Näherungsfunktionen diese Drift errechnen und korrigieren. Dadurch kann ein gutes Messergebnis selbst bei einer langsam fortschreitenden Drift der Waage oder bei sich aufbauenden Produktablagerungen erreicht werden.

## Patentansprüche

1. Waage zum automatischen Wiegen von strangförmigem Wiegegut, mit einem Zuführband (2) und einem Abführband (3) zum Transport des Wiegeguts und mit einem zwischen Zuführband (2) und Abführband (3) angeordneten und als Rolle (41) ausgebildeten Gewichtsaufnehmer (4), und einer Auswertevorrichtung (5) mit einem Integrator (51), der zum Bestimmen des Gesamtgewichts des Wiegeguts das Signal des Gewichtsaufnehmers (4) über die Zeit integriert,
**dadurch gekennzeichnet,**
**dass** die Auswertevorrichtung (5) einen Differentiator (52) aufweist, der das Signal des Gewichtsaufnehmers (4) zweifach über die Zeit differentiert und die Auswertevorrichtung (5) den Startzeitpunkt und den Stoppzeitpunkt einer Messung anhand einer Nullstelle der zweiten Ableitung des Gewichtssignals automatisch bestimmt.

2. Waage nach Anspruch 1,
**dadurch gekennzeichnet,**
**dass** die Auswertevorrichtung (5) den Startzeitpunkt und/oder den Stoppzeitpunkt durch Vergleich des differentierten Gewichtssignals mit einem vorzugsweise einstellbaren Schwellwertes bestimmt, wobei vorzugsweise der Schwellwert für den Startzeitpunkt und der Schwellwert für den Stoppzeitpunkt jeweils separat vorgebbar sind.

3. Waage nach einem der Ansprüche 1 bis 2,
**dadurch gekennzeichnet,**
**dass** die Auswertevorrichtung (5) den Startzeitpunkt und/oder den Stoppzeitpunkt durch die Auswertung des Vorzeichens des einfach differentierten Gewichtssignals in Kombination mit der Zeit bestimmt, indem das Vorliegen eines positiven Vorzeichens über eine vorbestimmte, vorzugsweise einstellbare, Zeitspanne den Startzeitpunkt festlegt und /oder indem das Vorliegen eines negativen Vorzeichens über eine vorbestimmte, vorzugsweise einstellbare, Zeitspanne den Stoppzeitpunkt festlegt.

4. Waage nach einem der Ansprüche 1 bis 3,
**dadurch gekennzeichnet,**
**dass** die Auswertevorrichtung (5) ein einstellbares Filter (53), vorzugsweise Tiefpassfilter oder Bandpassfilter, zur Glättung der Messsignale des Gewichtsaufnehmers (4) aufweist.

5. Waage nach Anspruch 4,
**dadurch gekennzeichnet,**
**dass** die Frequenz, vorzugsweise Mittenfrequenz oder Grenzfrequenz und/oder die Steilheit des Filters (53) einstellbar ist.

6. Waage nach dem Oberbegriff des Anspruchs 1,
**dadurch gekennzeichnet,**
**dass** die Auswertevorrichtung (5) einen Speicher (54) aufweist, der zum fortlaufenden Speichern einer Vielzahl von Entlastungswerten ausgebildet ist und die Auswertevorrichtung (5) anhand dieser Entlastungswerte eine Drift des Gewichtsaufnehmers (4) korrigiert.

7. Waage nach Anspruch 6,
**dadurch gekennzeichnet,**
**dass** die Auswertevorrichtung (5) einen Entlastungswert bestimmt, indem Sie den in der Mitte zwischen zwei Wiegevorgängen gemessenen Gewichtswert als Entlastungswert in dem Speicher (54) fortlaufend abspeichert.

8. Waage nach einem der vorhergehenden Ansprüche,
**dadurch gekennzeichnet,**
**dass** die Rolle (41) so angeordnet ist, dass die Oberseite der Rolle (41) mit der Auflagefläche des Zuführbandes (2) und der Auflagefläche des Abführbandes (3) fluchtet.

9. Waage nach einem der Ansprüche 1 bis 7,
**dadurch gekennzeichnet,**
**dass** die Rolle (41) so angeordnet ist, dass die Oberseite der Rolle gegenüber der Auflagefläche des Zuführbandes (2) und der Auflagefläche des Abführbandes (3) um eine Strecke von 0,2mm bis 3mm erhaben ist.

10. Waage nach einem der vorhergehenden Ansprüche,
**dadurch gekennzeichnet,**
**dass** die Rolle (41) einen Durchmesser im Bereich von 15mm bis 75mm aufweist.

11. Waage nach einem der vorhergehenden Ansprüche,
**dadurch gekennzeichnet,**
**dass** die Auswertevorrichtung (5) die Integrationsintervalle an die Transportgeschwindigkeit des Zuführbandes (2) und/oder Abführbandes (3) anpasst, vorzugsweise indem die Auswertevorrichtung (5) die Anzahl der Integrationsintervalle pro Zeiteinheit bei höherer Transportgeschwindigkeit erhöht.

## Claims

1. Scales for automatically weighing strand-shaped goods to be weighed, having a supply belt (2) and a removal belt (3) for transporting the goods to be weighed and having a weight transducer (4) that is arranged between the supply belt (2) and the removal belt (3) and is configured in the form of a roller, and an evaluation apparatus (5) having an integrator (51), which integrates the signal of the weight transducer (4) with respect to time to determine the total weight of the goods to be weighed, **characterized in that** the evaluation apparatus (5) has a differentiator (52) that differentiates the signal of the weight transducer (4) twice with respect to time and the evaluation apparatus (5) automatically determines the starting time and the stop time of a measurement on the basis of a zero point of the second derivative of the weight signal.

2. Scales according to Claim 1, **characterized in that** the evaluation apparatus (5) determines the starting point and/or the stop point by comparing the differentiated weight signal to a preferably adjustable threshold value, wherein preferably the threshold value for the starting point and the threshold value for the stop point are in each case separately specifiable.

3. Scales according to one of Claims 1 to 2, **characterized in that** the evaluation apparatus (5) determines the starting point and/or the stop point by the evaluation of the sign of the once differentiated weight signal in combination with time, by way of the presence of a positive sign over a predetermined, preferably adjustable, time period fixing the starting time and/or the presence of a negative sign over a predetermined, preferably adjustable time period fixing the stop time.

4. Scales according to one of Claims 1 to 3, **characterized in that** the evaluation apparatus (5) has an adjustable filter (53), preferably a lowpass filter or bandpass filter, for smoothing the measurement signals of the weight transducer (4).

5. Scales according to Claim 4, **characterized in that** the frequency, preferably the central frequency or limit frequency, and/or the steepness of the filter (53) are adjustable.

6. Scales according to the preamble of Claim 1, **characterized in that** the evaluation apparatus (5) has a memory (54) that is configured for continuously storing a multiplicity of values at zero weight, and the evaluation apparatus (5) corrects a drift of the weight transducer (4) on the basis of said values at zero weight.

7. Scales according to Claim 6, **characterized in that** the evaluation apparatus (5) determines a value at zero weight by continuously storing in the memory (54) the weight value that is measured in the middle between two weighing processes in the form of the value at zero weight.

8. Scales according to one of the preceding claims, **characterized in that** the roller (41) is arranged such that the upper side of the roller (41) is flush with the placement surface of the supply belt (2) and the placement surface of the removal belt (3).

9. Scales according to one of Claims 1 to 7, **characterized in that** the roller (41) is arranged such that the upper side of the roller is elevated by a distance of 0.2 mm to 3 mm with respect to the placement surface of the supply belt (2) and the placement surface of the removal belt (3).

10. Scales according to one of the preceding claims, **characterized in that** the roller (41) has a diameter in the range of 15 mm to 75 mm.

11. Scales according to one of the preceding claims, **characterized in that** the evaluation apparatus (5) matches the integration intervals to the transport speed of the supply belt (2) and/or removal belt (3), preferably by the evaluation apparatus (5) increasing the number of the integration intervals per unit time at greater transport speed.

## Revendications

1. Balance destinée à la pesée automatique de biens de pesage en forme de brins, avec une bande d'alimentation (2) et une bande d'évacuation (3), qui sont destinées au transport du bien de pesage, et avec un capteur de poids (4), lequel est conçu sous la forme d'un rouleau (41) et est disposé entre la bande d'alimentation (2) et la bande d'évacuation (3), et avec un dispositif d'analyse (5) ainsi qu'un intégrateur (51), lequel intègre le signal du capteur de poids (4) au fil du temps, en vue de la détermination du poids total du bien de pesage,
**caractérisée en ce que**
le dispositif d'analyse (5) présente un différentiateur (52) qui différencie le signal du capteur de poids (4) deux fois au fil du temps et le dispositif d'analyse (5) détermine automatiquement l'heure de départ et l'heure d'arrêt d'une mesure à l'aide d'un point zéro de la deuxième dérivée du signal de poids.

2. Balance selon la revendication 1,
**caractérisée en ce que**
le dispositif d'analyse (5) détermine l'heure de départ et/ou l'heure d'arrêt en comparant le signal de poids différentié avec une valeur de seuil qui est réglable de préférence, selon laquelle la valeur de seuil pour l'heure de départ et la valeur de seuil pour l'heure d'arrêt peuvent, de préférence, être prédéfinies respectivement de manière séparée.

3. Balance selon l'une des revendications 1 à 2,
**caractérisée en ce que**
le dispositif d'analyse (5) détermine, en combinaison avec le temps, l'heure de départ et/ou l'heure d'arrêt en analysant le signe algébrique du signal de poids différentié une fois, en ce sens que la présence d'un signe algébrique positif détermine l'heure de départ sur une période de temps prédéterminée et qui est réglable de préférence et/ou en ce sens que la présence d'un signe algébrique négatif détermine l'heure d'arrêt sur une période de temps prédéterminée et qui est réglable de préférence.

4. Balance selon l'une des revendications 1 à 3,
**caractérisée en ce que**
le dispositif d'analyse (5) présente un filtre (53) réglable, de préférence un filtre passe-bas ou un filtre passe-bande, en vue du lissage des signaux de mesure du capteur de poids (4).

5. Balance selon la revendication 4,
**caractérisée en ce que**
la fréquence, de préférence la fréquence centrale ou la fréquence limite et/ou la pente du filtre (53) sont réglables.

6. Balance selon le préambule de la revendication 1,
**caractérisée en ce que**
le dispositif d'analyse (5) présente une mémoire (54), laquelle est conçue en vue de l'enregistrement continu d'un grand nombre de valeurs de déchargement, et le dispositif d'analyse (5) corrige une dérive du capteur de poids (4) à l'aide de ces valeurs de déchargement.

7. Balance selon la revendication 6,
**caractérisée en ce que**
le dispositif d'analyse (5) détermine une valeur de déchargement, en ce sens qu'elle enregistre en continu dans la mémoire (54), sous la forme d'une valeur de déchargement, la valeur pondérale mesurée au centre entre deux processus de pesage.

8. Balance selon l'une des revendications précédentes,
**caractérisée en ce que**
le rouleau (41) est disposé de telle sorte que la face supérieure du rouleau (41) est alignée avec la surface d'appui de la bande d'alimentation (2) et la surface d'appui de la bande d'évacuation (3).

9. Balance selon l'une des revendications 1 à 7,
**caractérisée en ce que**
le rouleau (41) est disposé de telle sorte que la face supérieure du rouleau est surélevée d'un tronçon de 0,2 mm à 3 mm par rapport à la surface d'appui de la bande d'alimentation (2) et la surface d'appui de la bande d'évacuation (3).

10. Balance selon l'une des revendications précédentes,
**caractérisée en ce que**
le rouleau (41) présente un diamètre compris entre 15 mm et 75 mm.

11. Balance selon l'une des revendications précédentes,
**caractérisée en ce que**
le dispositif d'analyse (5) adapte les intervalles d'intégration à la vitesse de transport de la bande d'alimentation (2) et/ou de la bande d'évacuation (3), de préférence en ce sens que le dispositif d'analyse (5) augmente le nombre d'intervalles d'intégration par unité de temps quand la vitesse de transport est plus élevée.
